# EUROPEAN PATENT APPLICATION

(11) **EP 2 206 632 A1**
(43) Date of publication of application: **14.07.2010**
(21) Application number: 09009571.2
(22) Date of filing: 23.07.2009
(51) Int. Cl.: B60R 21/233

(54) **Driver's air bag**

(30) Priority: 08.01.2009 KR 20090001616
(71) Applicant: Hyundai Mobis Co., Ltd., Yongin-si, Gyeonggi-do 449-912 (KR)
(72) Inventor: Koh, Min Seok, Gyeonggi-do, 449-912 (KR)
(74) Representative: Urner, Peter

(57) **Abstract**

The present invention discloses a driver's air bag which can prevent a driver from being injured by a shock applied to the driver's chest at an initial stage of deployment because a portion corresponding to the chest of the driver is not fully deployed at an initial stage of the deployment of an air cushion by comprising: a cushion front surface (22) to be brought into contact with a driver upon inflation of an air cushion (20); a cushion rear surface (24) disposed at an opposite side of the cushion front surface (22), and having an inflator hole (24a) formed thereon; and first and second tethers (32, 34) which are disposed, spaced apart from each other, with respect to the inflator hole (24a), and within the air cushion (20), with first ends thereof being fixed to the cushion front surface (22) and second ends thereof being fixed to the cushion rear surface (24).

## Description

### BACKGROUND OF THE INVENTION

### 1.Field of the Invention

The present invention relates to a driver's air bag, and more particularly, to a driver's air bag, which can prevent a driver from being injured by a shock applied to the driver's chest at an initial stage of deployment because a portion corresponding to the chest of the driver is not fully deployed at the initial stage of the deployment of the air cushion.

### 2. Discussion_of the Related Art

Generally, in a car crash, the driver's body is rapidly swung forward and the upper chest smashes against the steering wheel due to the inertial force of the moving vehicle, possibly causing serious injury.

To prevent such injury, recently, an air bag is installed in the center of the steering wheel and is deployed upon head-on collision to ensure the driver's safety.

The air bag comprises an inflator containing an explosive and an air cushion which is inflated and deployed by gas generated by detonation of the explosive within the inflator to thus protect the driver.

The air cushion includes a cushion front surface to be brought into contact with the driver and a cushion rear surface disposed at an opposite side thereof.

In addition, within the air cushion, a tether is installed which is connected to the inside of the cushion front surface of the air cushion and a fixing bar in the inflator and maintains the shape of the air cushion upon full deployment.

In the above-described driver's air bag according to the prior art, in the event of a vehicle collision of a predetermined magnitude or greater, a detonator in the inflator is operated to detonate the explosive by a control command from an ACU (air-bag control unit, which is not shown), that is applied with a collision signal from a collision detection sensor (not shown), and the air cushion inflates by gas generated by the detonation and supports the upper torso of the driver, thus preventing injury.

Moreover, in recent times, there were made new regulations in North America that must meet injury performance criteria when a driver is in an Out-Of-Position (OOP) seating position. Hence, a driver's air bag requires a high level of safety design and development that causes no injury to a driver, as well as the basic rigidity for self deployment.

Meanwhile, as the time taken for the driver's torso to be swung is very short, the deployment of the air cushion is instantaneously done within a much shorter time.

However, when an unexpected accident, such as head-on collision, occurs to a driver in the OOP posture, the deployment speed of the air cushion is too fast and the cushion front surface of the air cushion rapidly springs out toward the driver's side in the initial stage of deployment. Thus, the deployment pressure of the air cushion is directly transferred to the driver to give the driver's swinging torso a hard blow, thus causing serious injury to the driver's chest.

### SUMMARY OF THE INVENTION

The present invention has its object to provide a driver's air bag, which can prevent a driver from being injured by a shock applied to the driver's chest at an initial stage of deployment because a portion corresponding to the chest of the driver is not fully deployed at an initial stage of the deployment of an air cushion.

In order to accomplish the object, the present invention provides a driver's air bag, comprising: a cushion front surface to be brought into contact with a driver upon inflation of an air cushion; a cushion rear surface disposed at an opposite side of the cushion front surface, and having an inflator hole formed thereon; and first and second tethers which are disposed, spaced apart from each other, with respect to the inflator hole, and within the air cushion, with first ends thereof being fixed to the cushion front surface and second ends thereof being fixed to the cushion rear surface.

The driver's air bag according to the present invention can prevent a driver from being injured by a shock applied to the driver's chest at an initial stage of deployment because a portion corresponding to the chest of the driver is not fully deployed at an initial stage of the deployment of an air cushion by comprising: a cushion front surface to be brought into contact with a driver upon inflation of an air cushion; a cushion rear surface disposed at an opposite side of the cushion front surface, and having an inflator hole formed thereon; and first and second tethers which are disposed, spaced apart from each other, with respect to the inflator hole, and within the air cushion, with first ends thereof being fixed to the cushion front surface and second ends thereof being fixed to the cushion rear surface.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a front view and a rear view showing a cushion front surface and a cushion rear surface which are included in a driver's air bag according to a first embodiment of the present invention;
FIG. 2 is a cut-away side view of an air cushion which is included in the driver's air bag according to the first embodiment of the present invention;
FIG. 3 is a front view and a rear view showing a cushion front surface and a cushion rear surface which are included in a driver's air bag according to a second embodiment of the present invention;
FIG. 4 is a cut-away side view of an air cushion which is included in the driver's air bag according to the second embodiment of the present invention;
FIG. 5 is a front view and a rear view showing a cushion front surface and a cushion rear surface which are included in a driver's air bag according to a third embodiment of the present invention;
FIG. 6 is a cut-away side view of an air cushion which is included in the driver's air bag according to the third embodiment of the present invention;
FIG. 7 is a front view and a rear view showing a cushion front surface and a cushion rear surface which are included in a driver's air bag according to a fourth embodiment of the present invention;
FIG. 8 is a cut-away side view of an air cushion which is included in the driver's air bag according to the fourth embodiment of the present invention;
FIG. 9 is a front view and a rear view showing a cushion front surface and a cushion rear surface which are included in a driver's air bag according to a fifth embodiment of the present invention;
FIG. 10 is a cut-away side view of an air cushion which is included in the driver's air bag according to the fifth embodiment of the present invention;
FIG. 11 is a front view and a rear view showing a cushion front surface and a cushion rear surface which are included in a driver's air bag according to a sixth embodiment of the present invention; and
FIG. 12 is a cut-away side view of an air cushion which is included in the driver's air bag according to the sixth embodiment of the present invention.

### DETAILED DESCRIPTION OF THE PREFERRED EMBODIMENTS

Exemplary embodiments of the present invention having the above effect will be described in detail with reference to the accompanying drawings.

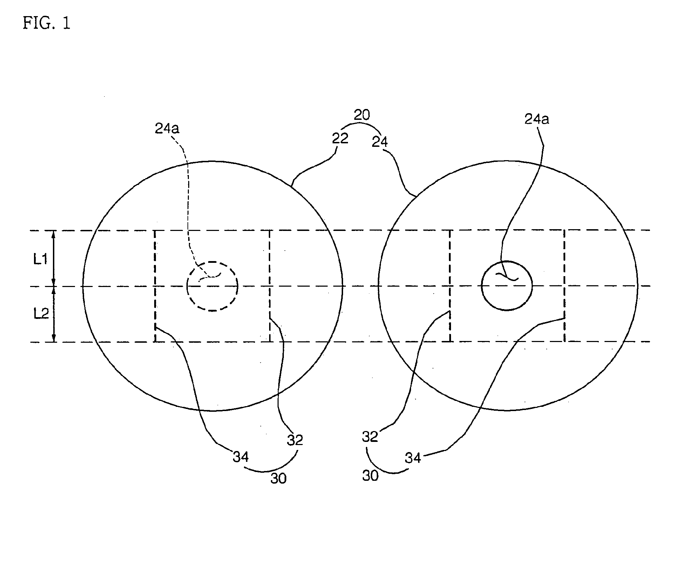

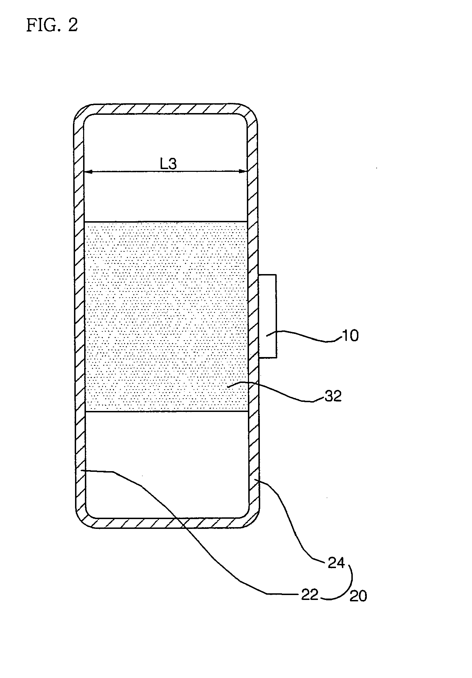

FIG. 1 is a front view and a rear view showing a cushion front surface and a cushion rear surface which are included in a driver's air bag according to a first embodiment of the present invention. FIG. 2 is a cut-away side view of an air cushion which is included in the driver's air bag according to the first embodiment of the present invention.

Referring to FIGs. 1 and 2, the driver's air bag according to the first embodiment of the present invention comprises an inflator 10 for generating gas upon collision of a vehicle and an air cushion 20 for protecting a driver by being inflated and deployed by the gas introduced from the inflator 10.

A vent hole (not shown) for discharging gas is formed at one side of the air cushion 20. The vent hole prevents the air cushion 20 from being rapidly inflated at an initial stage by discharging a high-pressure gas introduced into the air cushion 20 from the inflator 10 upon initial inflation of the air cushion 20, and allows the air cushion 20 to protect an occupant by a predetermined pressure by discharging the gas continuously introduced into the air cushion 20 from the inflator 10 after full deployment of the air cushion 20.

Further, the air cushion 20 includes a cushion front surface to be in brought into contact with a driver upon inflation of the air cushion 20 and a cushion rear surface 24 disposed at an opposite side of a cushion front surface 22.

An inflator hole 24a for receiving gas from the inflator 10 is formed on the cushion rear surface 24, and the inflator hole 24a is concealed by the inflator 10 which is mounted on the cushion rear surface 24.

In addition, in order to keep a portion corresponding to the driver's chest from fully deployment at the initial stage of the deployment of the air cushion 20, a tether 30 is disposed between the cushion front surface 22 and the cushion rear surface 24 within the air cushion 20.

Within the air cushion 20, first end of the tether 30 is sewn and secured to the cushion front surface 22, and second end thereof is sewn and secured to the cushion rear surface 24. The tether 30 of this type includes a first tether 32 and a second tether 34 which are disposed, spaced apart from each other, with respect to the inflator hole 24a.

The first and second tether 32 and 34 are disposed at left and right sides respectively, spaced apart from each other, with respect to the inflator hole 24a. Of course, the first and second tethers 32 and 34 may be disposed at upper and lower sides, spaced apart from each other, with respect to the inflator hole 24a, or four tethers may be disposed at upper, lower, left, and right sides respectively, spaced apart from one another, with respect to the inflator hole 24a. However, this embodiment will be described with respect to a case where the first and second tethers 32 and 34 are disposed at left and right sides respectively, spaced apart from each other, with respect to the inflator hole 24a.

Further, the first and second tethers 32 and 34 are disposed at left and right sides respectively, spaced apart from each other, with respect to the inflator hole 24a, and are secured longitudinally in an up-and-down direction to the cushion front surface 22 and the cushion rear surface 24. That is, the first and second tethers 32 and 34 are disposed such that surfaces having a larger width face each other. Of course, the first and second tethers 32 and 34 may be disposed at left and right sides respectively, spaced apart from each other, with respect to the inflator hole 24a, or they may be secured longitudinally in a left-and-right direction to the cushion front surface 22 and the cushion rear surface 24. However, this embodiment will be described with respect to a case where the first and second tethers 32 and 34 are disposed at left and right sides respectively, spaced apart from each other, with respect to the inflator hole 24a and they are secured longitudinally in an up-and-down direction to the cushion front surface 22 and the cushion rear surface 24.

Preferably, the first tether 32 and second tether 34 are respectively secured to the center parts of the cushion front surface 22 and cushion rear surface 24 in order to keep the portion corresponding to the driver's chest from fully deployment at the initial stage of the deployment of the air cushion 20.

Further, the first and second tethers 32 and 34 are respectively secured to the center parts of the cushion front surface 22 and cushion rear surface 24 such that an upper length L1 and a lower length L2 are identical to each other with respect to the inflator hole 24a. Of course, the first and second tethers 32 and 34 may be secured such that the upper length L1 is greater than the lower length L2 with respect to the inflator hole 24a, or may be secured such that the upper length L2 is smaller than the lower length L2 with respect to the inflator hole 24a. However, this embodiment has been illustrated in FIG. 1 with respect to a case where the first and second tethers 32 and 34 are secured such that the upper length L1 and the lower length L2 are identical to each other.

Further, the first and second tethers 32 and 34 are formed in a rectangular shape, and hence a length L3 from the cushion rear surface 24 to the cushion front surface 22 is constant throughout the upper and lower sides.

An operation of the thus-constructed driver's air bag according to the first embodiment of the present invention will be described below.

In the event of a vehicle collision of a predetermined magnitude or greater, a detonator in the inflator 10 is operated to detonate the explosive by a control command from an ACU (air-bag control unit, which is not shown), that is applied with a collision signal from a collision detection sensor (not shown), and the air cushion inflates 20 by gas generated by the detonation. At this time, as first ends of the first and second tethers 32 and 34 are secured to the cushion front surface 22 and second ends thereof are secured to the cushion rear surface 24, a portion of the cushion front surface 22 corresponding to the driver's chest is prevented from being inflated, thereby preventing the driver's chest from being injured by a blow from the air cushion 20 on the driver's chest at the initial stage of the deployment of the air cushion 20.

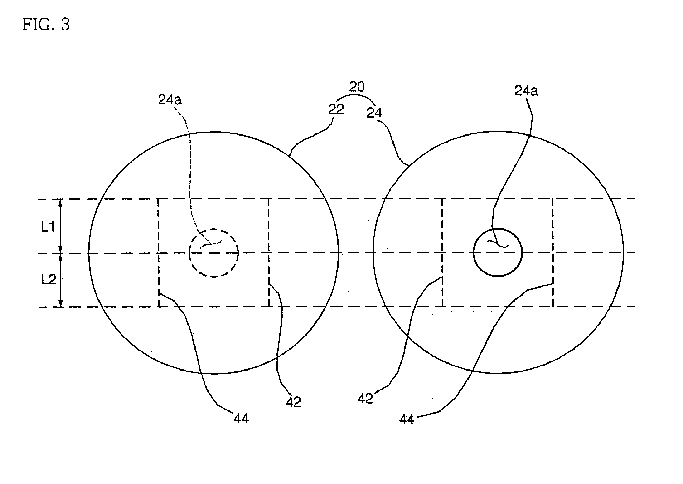

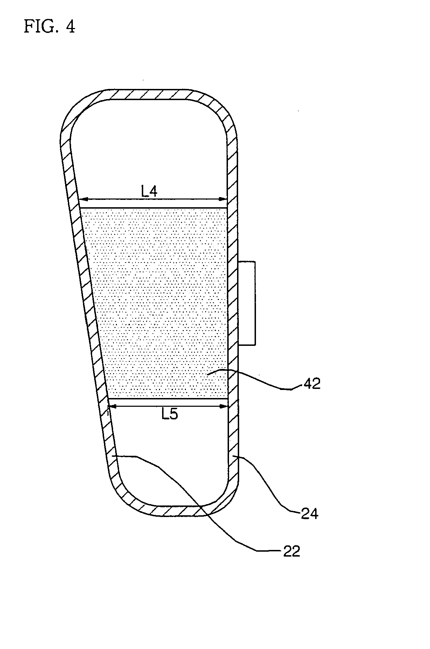

FIG. 3 is a front view and a rear view showing a cushion front surface and a cushion rear surface which are included in a driver's air bag according to a second embodiment of the present invention. FIG. 4 is a cut-away side view of an air cushion which is included in the driver's air bag according to the second embodiment of the present invention. Here, descriptions of the same elements as those of the first embodiment are omitted.

Referring to FIGs. 3 and 4, in the driver's air bag according to the second embodiment of the present invention, the length from the cushion rear surface 24 to the cushion front surface 22 becomes smaller as first and second tethers 42 and 44 extend downward because an upper length L4 is greater than a lower length L5. That is to say, the first and second tethers 42 and 44 are secured to the cushion rear surface 24 in parallel with each other vertically, and are secured to the cushion front surface 22 to be sloped vertically. In this case, the cushion front surface 22 of the air cushion 20, too, is formed to be sloped vertically corresponding to the shape of the first and second tethers 42 and 44 secured to the cushion front surface 22.

In addition, the first and second tethers 42 and 44 are respectively secured to the center parts of the cushion front surface 22 and cushion rear surface 24, such that the upper length L1 and the lower length L2 are identical to each other with respect to the inflator hole 24a.

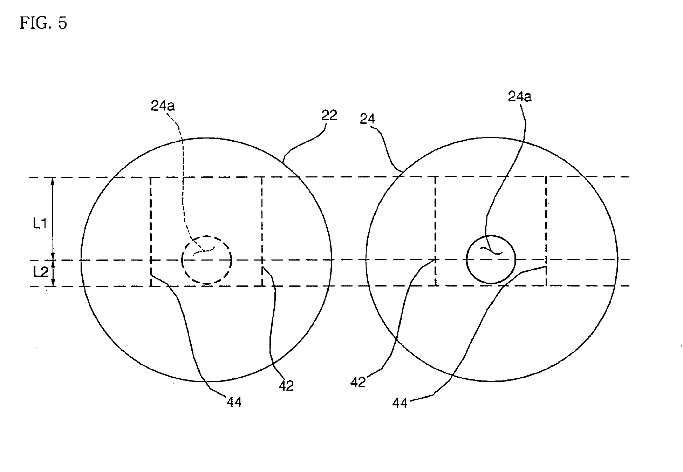

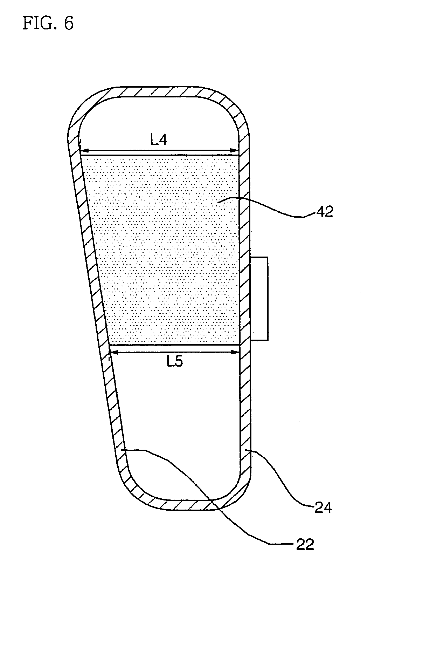

FIG. 5 is a front view and a rear view showing a cushion front surface and a cushion rear surface which are included in a driver's air bag according to a third embodiment of the present invention. FIG. 6 is a cut-away side view of an air cushion which is included in the driver's air bag according to the third embodiment of the present invention. Here, descriptions of the same elements as those of the second embodiment are omitted.

Referring to FIGs. 5 and 6, in the driver's air bag according to the third embodiment of the present invention, the length from the cushion rear surface 24 to the cushion front surface 22 becomes smaller as first and second tethers 42 and 44 extend downward because the upper length L4 is greater than the lower length L5, and they are respectively secured to the cushion front surface 22 and the cushion rear surface 24 such that the upper length L1 is greater than the lower length L2 with respect to the inflator hole 24a.

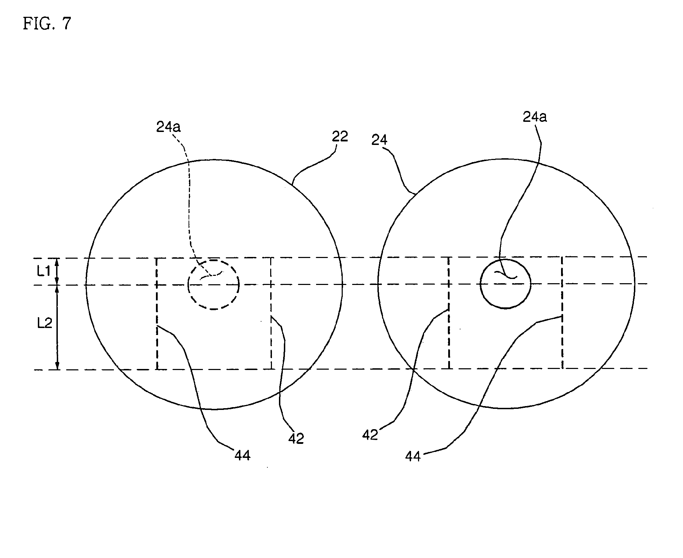

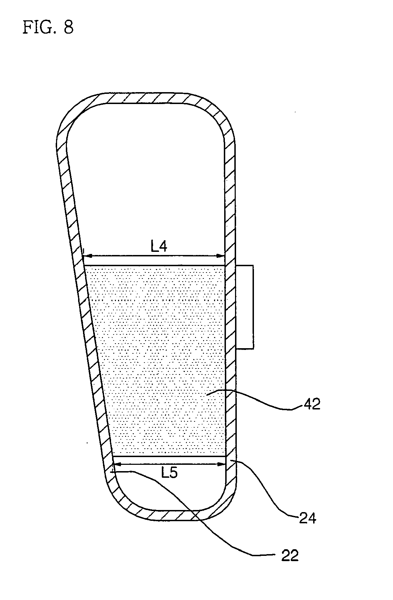

FIG. 7 is a front view and a rear view showing a cushion front surface and a cushion rear surface which are included in a driver's air bag according to a fourth embodiment of the present invention. FIG. 8 is a cut-away side view of an air cushion which is included in the driver's air bag according to the fourth embodiment of the present invention. Here, descriptions of the same elements as those of the second and third embodiments are omitted.

Referring to FIGs. 7 and 8, in the driver's air bag according to the fourth embodiment of the present invention, the length from the cushion rear surface 24 to the cushion front surface 22 becomes smaller as first and second tethers 42 and 44 extend downward because the upper length L4 is greater than the lower length L5, and they are respectively secured to the cushion front surface 22 and the cushion rear surface 24 such that the upper length L1 is smaller than the lower length L2 with respect to the inflator hole 24a.

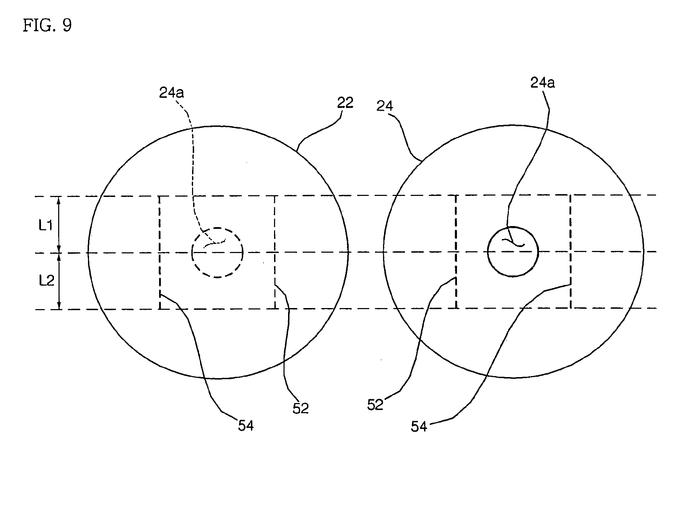

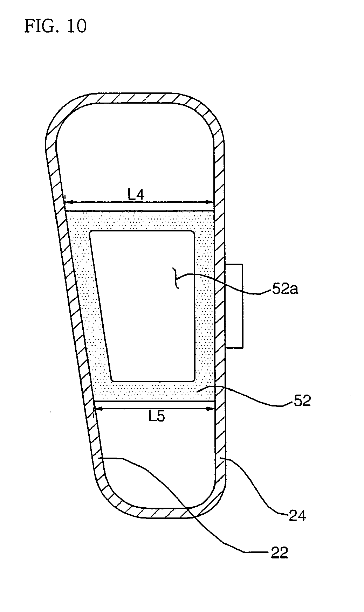

FIG. 9 is a front view and a rear view showing a cushion front surface and a cushion rear surface which are included in a driver's air bag according to a fifth embodiment of the present invention. FIG. 10 is a cut-away side view of an air cushion which is included in the driver's air bag according to the fifth embodiment of the present invention. Here, descriptions of the same elements as those of the second, third, and fourth embodiments are omitted.

Referring to FIGs. 9 and 10, in the driver's air bag according to the fifth embodiment of the present invention, the length from the cushion rear surface 24 to the cushion front surface 22 becomes smaller as first and second tethers 52 and 54 extend downward because the upper length L4 is greater than the lower length L5, and the center parts thereof are cut out to form an opening 52a.

The opening 52a is formed in a shape corresponding to the shape of the first and second tethers 52 and 54 such that sides facing the cushion front rear surface 24 are parallel vertically and sides facing the cushion front surface 22 are sloped vertically.

Gas introduced into the air cushion 20 may be easily movable within the air cushion 20 through the opening 52a.

The first and second tethers 52 and 54 may be respectively secured to the cushion front surface 22 and cushion rear surface 24 so that the upper length L1 and the lower length L2 are identical to each other with respect to the inflator hole 24a. Alternatively, they may be respectively secured to the cushion front surface 22 and cushion rear surface 24 so that the upper length L1 is greater than the lower length L2. Alternatively, they may be respectively secured to the cushion front surface 22 and cushion rear surface 24 so that the upper length L1 is smaller than the lower length L2.

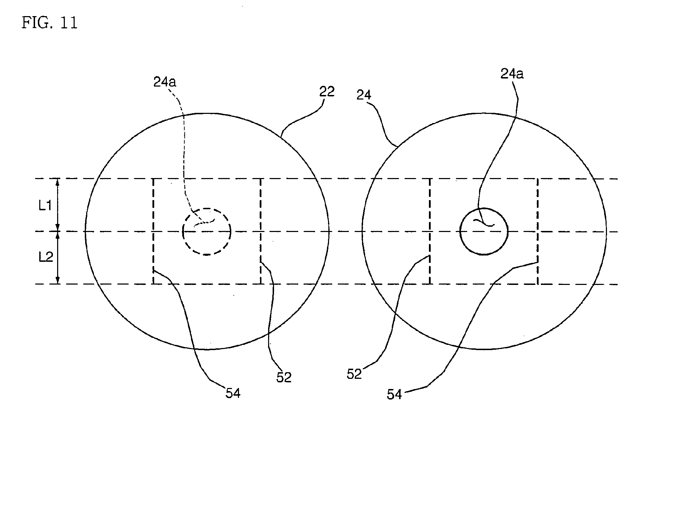

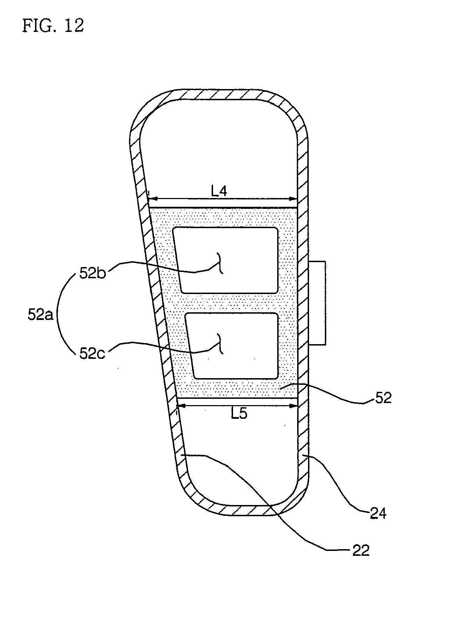

FIG. 11 is a front view and a rear view showing a cushion front surface and a cushion rear surface which are included in a driver's air bag according to a sixth embodiment of the present invention. FIG. 12 is a cut-away side view of an air cushion which is included in the driver's air bag according to the sixth embodiment of the present invention. Here, descriptions of the same elements as those of the fifth embodiment are omitted.

Referring to FIGs. 11 and 12, in the driver's air bag according to the sixth embodiment of the present invention, the length from the cushion rear surface 24 to the cushion front surface 22 becomes smaller as first and second tethers 52 and 54 extend downward because the upper length L4 is greater than the lower length L5, and the center parts thereof are cut out to form an opening 52a. The opening 52a includes a first opening 52b and a second opening 52c which are disposed spaced apart from each other. Of course, the number of the opening 52a is not limited to 2, and a plurality of openings may be formed.

## Claims

1. A driver's air bag, comprising:
a cushion front surface to be brought into contact with a driver upon inflation of an air cushion;
a cushion rear surface disposed at an opposite side of the cushion front surface, and having an inflator hole formed thereon; and
first and second tethers which are disposed, spaced apart from each other, with respect to the inflator hole, and within the air cushion, with first ends thereof being fixed to the cushion front surface and second ends thereof being fixed to the cushion rear surface.

2. The driver's air bag of claim 1, wherein the first and second tethers are disposed at left and right sides respectively, spaced apart from each other, with respect to the inflator hole.

3. The driver's air bag of claim 2, wherein the first and second tethers are secured longitudinally in an up-and-down direction to the cushion front surface and the cushion rear surface.

4. The driver's air bag of claim 3, wherein a length to the cushion front surface from the cushion rear surface becomes smaller as the first and second tethers extend downward.

5. The driver's air bag of claim 4, wherein the first and second tethers are provided with an opening.

6. The driver's air bag of claim 5, wherein a plurality of openings are formed.

7. The driver's air bag of claim 3, wherein the first and second tethers are respectively secured to the cushion front surface and the cushion rear surface such that upper lengths and lower lengths are identical to each other with respect to the inflator hole.

8. The driver's air bag of claim 3, wherein the first and second tethers are respectively secured to the cushion front surface and the cushion rear surface such that upper lengths are greater than lower lengths with respect to the inflator hole.

9. The driver's air bag of claim 3, wherein the first and second tethers are respectively secured to the cushion front surface and the cushion rear surface such that upper lengths are smaller than lower lengths with respect to the inflator hole.
